# EUROPEAN PATENT APPLICATION

(11) **EP 4 299 804 A1**
(43) Date of publication of application: **03.01.2024**
(21) Application number: 22759594.9
(22) Date of filing: 21.02.2022
(51) Int. Cl.: D01F 6/80, C08J 5/18, D01F 1/09

(54) **HEAT-RESISTANT HIGH-TOUGHNESS FIBER, PRODUCTION METHOD THEREFOR, AND HEAT-RESISTANT HIGH-TOUGHNESS FILM**

(30) Priority: 24.02.2021 JP 2021027464; 09.03.2021 JP 2021037500; 30.07.2021 JP 2021125670; 26.11.2021 JP 2021191743
(71) Applicant: Teijin Limited, Osaka 530-0005 (JP)
(72) Inventor: SATOH, Yusuke, Osaka-shi, Osaka 530-0005 (JP); ZHOU, Zongyang, Osaka-shi, Osaka 530-0005 (JP)
(74) Representative: Carpmaels & Ransford LLP
(86) International application number: PCT/JP2022/007028
(87) International publication number: WO 2022/181558

(57) **Abstract**

Provided are: heat-resistant high-toughness fibers and film that have excellent balance of physical properties regarding strength, degree of elongation, and heat resistance. The heat-resistant high-toughness fibers according to the present invention are characterized by having a breaking strength of 3.5-15 cN/dtex, an elongation at break of 5-30%, and a melting point of at least 290°C. A production method for heat-resistant high-toughness fibers according to the present invention is characterized by using, in a yarn material, a copolymerized aramid polymer containing at least three types of monomeric units selected from the group consisting of meta-phenylenediamine, para-phenylenediamine, isophthaloyl, and terephthaloyl.

## Description

### Technical Field

The present invention relates to a heat-resistant high-toughness fiber, a production method thereof, and a heat-resistant high-toughness film. More specifically, the present invention relates to a heat-resistant high-toughness fiber which has an excellent balance of overall physical properties including strength, elongation, and heat resistance, and optional additional knot strength and/or electrical conductivity, as well as a production method therefor and a heat-resistant high-toughness film.

### Background Art

In recent years, along with the development of spinning technology, various fibers have been industrialized, and by selecting the chemical structure constituting the fibers and spinning conditions, fibers with physical properties according to the required performance and application have been developed and produced. Though high-strength, high-modulus fibers can impart a high-strength structure, if the elongation thereof is low, they will break without being able to absorb large deformations. The strength and elongation of these fibers are in a trade-off relationship, and it has been difficult to develop high-toughness fibers which satisfy both strength and elongation.

Examples of reports on high-toughness fibers include the following. For example, Japanese Unexamined Patent Publication (Kokai) No. 59-100710 (Patent Literature 1) reports a high-toughness polyester fiber having a strength of 15 to 25 g/de and an elongation of 15 to 25% obtained by heat shrinking an ultra-drawn polyethylene fiber. Furthermore, Japanese Unexamined Patent Publication (Kokai) No. 2000-144527 (Patent Literature 2) reports that a polyester fiber having a strength of 8 to 9 g/de and an elongation of 10 to 15% is obtained by adjusting the positions of oiling and bundling. Furthermore, Japanese Unexamined Patent Publication (Kokai) No. 2008-308786 (Patent Literature 3) reports a polyester fiber having a strength of 8 to 10 cN/dtex and an elongation of 20 to 25% or more obtained by controlling the temperature history on the spinning line. However, all of these are general-purpose fibers and have relatively low heat resistance.

In addition to strength, heat resistance is also a property required in material development. For example, fibers made of wholly aromatic polyamide (sometimes referred to as aramid fibers) are particularly useful as high-strength, heat-resistant, and flame-retardant fibers.

For example, para-type wholly aromatic polyamide fibers composed of para-phenylene terephthalamide have high strength and high elastic modulus, and thus, are widely used as reinforcing materials for various matrices and industrial materials such as ropes. In addition, meta-type wholly aromatic polyamide fibers composed of meta-phenylene isophthalamide are heat-resistant and flexible, and are used in industrial applications, for example, disaster-prevention safety clothing such as protective clothing and rubber reinforcing materials which require heat resistance.

The mechanical properties of these aramid fibers include, for para-type, a breaking strength of 15 to 20 cN/dtex, and an elongation at break of 1 to 5% ("Kevlar ^{™}" manufactured by DuPont, TM and "Twaron " manufactured by Teijin Limited), and for meta-type, a breaking strength of 3 to TM 6 cN/dtex, and an elongation at break of 30 to 60% ("Nomex " manufactured by DuPont, and TM "Teijinconex " manufactured by Teijin Limited), and applications thereof have been developed in consideration of these fiber properties.

However, regarding the use of aramid fibers, when higher strength is required in fields where heat resistance is required, para-type fibers are generally used, but can be used only in the applications where deformation during use is less likely to occur. Conversely, when flexibility is required in fields where heat resistance is required, meta-type fibers are used, but it is necessary to sacrifice strength.

Thus, while it is advantageous to obtain synthetic fibers which have a good balance of strength and elongation while having heat resistance equivalent to that of aramid fibers, this has not been achieved in the prior art.

Furthermore, films are similarly developed and produced with physical properties according to the required performance and application. A high-strength, high-elasticity film can impart a high-strength structure, but if the elongation thereof is low, it will break without being able to absorb large deformation. The strength and elongation of these films are in a trade-off relationship, and it has been difficult to develop a high-toughness film that satisfies both strength and elongation.

Examples of reports on heat-resistant films include the following. For example, Japanese Unexamined Patent Publication (Kokai) No. 2003-176354 (Patent Literature 10) reports a transparent film composed of a polymer containing a polyimide skeleton which has excellent heat resistance, but it has a glass transition temperature of about 120 to 160 °C and may be deformed at high temperatures. Japanese Unexamined Patent Publication (Kokai) No. 3-138129 (Patent Literature 11) reports a high-strength film having improved heat resistance, but while the strength is 160 MPa at the maximum, the heat shrinkage at 250 °C is a high value of 20% or less, which is insufficient for use in high temperature ranges.

### Citation List

### Patent Literature

[PTL 1] Japanese Unexamined Patent Publication (Kokai) No. 59-100710
[PTL 2] Japanese Unexamined Patent Publication (Kokai) No. 2000-144527
[PTL 3] Japanese Unexamined Patent Publication (Kokai) No. 2008-308786
[PTL 4] Japanese Unexamined Patent Publication (Kokai) No. 63-235521
[PTL 5] Japanese Unexamined Patent Publication (Kokai) No. 5-9867
[PTL 6] Japanese Unexamined Patent Publication (Kokai) No. 2019-157285
[PTL 7] Japanese Unexamined Patent Publication (Kokai) No. 2-216264
[PTL 8] Japanese Unexamined Patent Publication (Kokai) No. 2006-2213
[PTL 9] Japanese Unexamined Patent Publication (Kokai) No. 2006-342471
[PTL 10] Japanese Unexamined Patent Publication (Kokai) No. 2003-176354
[PTL 11] Japanese Unexamined Patent Publication (Kokai) No. 3-138129

### Summary of Invention

### Technical Problem

An object of the present invention is to provide a heat-resistant high-toughness fiber and a heat-resistant high-toughness film having a good balance of strength and elongation while having high heat resistance, as described above. Another object of the present invention is to provide a heat-resistant high-toughness fiber further having excellent knot strength and/or electrical conductivity, and a film having a good balance of strength and elongation while having high heat resistance.

### Solution to Problem

As a result of rigorous investigation in order to solve the problems described above, the present inventors have discovered that a heat-resistant high-toughness fiber or film which maintains a good balance of strength and elongation while having high heat resistance can be obtained from a polymer obtained by copolymerizing a plurality of specific monomers at a specific ratio, and have completed the present invention. In addition, the present inventors have discovered that knot strength and/or electrical conductivity can be further enhanced in such a heat-resistant high-toughness fiber, and have completed the present invention.

Specifically, the present invention provides the following:
1. A heat-resistant high-toughness fiber, having a breaking strength of 3.5 to 15 cN/dtex, an elongation at break of 5 to 30%, and a melting point of 290 °C or higher.
2. The heat-resistant high-toughness fiber according to matter 1 above, wherein the heat-resistant high-toughness fiber comprises a copolymerized aramid polymer containing at least three monomer units selected from the group consisting of meta-phenylenediamine, para-phenylenediamine, isophthaloyl, and terephthaloyl.
3. The heat-resistant high-toughness fiber according to matter 2 above, wherein a molar ratio of monomer units of the meta-phenylenediamine and/or the isophthaloyl to monomer units of the para-phenylenediamine and/or the terephthaloyl is in the range of 10 or more and less than 70: 90 or less and greater than 30.
4. The heat-resistant high-toughness fiber according to any one of matters 1 to 3 above, wherein the breaking strength is 7 to 15 cN/dtex, the elongation at break is 10 to 30%, and a dry heat dimensional change rate at 250 °C is less than 2%.
5. The heat-resistant high-toughness fiber according to matter 4 above, further having a knot strength of 4.4 to 5.6 cN/dtex.
6. The heat-resistant high-toughness fiber according to matter 4 or 5 above, wherein the molar ratio of monomer units of the meta-phenylenediamine and/or the isophthaloyl to monomer units of the para-phenylenediamine and/or the terephthaloyl is in the range of 40 or more and less than 70:60 or less and greater than 30.
7. The heat-resistant high-toughness fiber according to any one of matters 1 to 3 above, wherein the breaking strength is 8.0 cN/dtex or more and less than 15.0 cN/dtex, the elongation at break is greater than 5.0% and 20.0% or less, and a dry heat dimensional change rate at 300 °C is less than 5%.
8. The heat-resistant high-toughness fiber according to matter 7 above, wherein the molar ratio of monomer units of the meta-phenylenediamine and/or the isophthaloyl to monomer units of the para-phenylenediamine and/or the terephthaloyl is in the range of 10 or more and less than 40:90 or less and greater than 60.
9. The heat-resistant high-toughness fiber according to any one of matters 1 to 3 above, comprising electrically conductive fine particles in the fiber and having an electrical resistivity of 10³ Ωcm or less, wherein the breaking strength is 3.5 to 10 cN/dtex.
10. The heat-resistant high-toughness fiber according to matter 9 above, comprising 6 to 40 mass% of the electrically conductive fine particles.
11. The heat-resistant high-toughness fiber according to matter 9 or 10 above, wherein the electrically conductive fine particles are electrically conductive carbon black.
12. The heat-resistant high-toughness fiber according to any one of matters 9 to 11 above, wherein the molar ratio of monomer units of the meta-phenylenediamine and/or the isophthaloyl to monomer units of the para-phenylenediamine and/or the terephthaloyl is in the range of 50 or more and less than 70:50 or less and greater than 30.
13. A production method of heat-resistant high-toughness fiber, comprising the following steps (1) to (6):
   (1) providing a copolymerized aramid polymer containing at least three monomer units selected from the group consisting of meta-phenylenediamine, para-phenylenediamine, isophthaloyl, and terephthaloyl, a molar ratio of monomer units of the meta-phenylenediamine and/or the isophthaloyl to monomer units of the para-phenylenediamine and/or the terephthaloyl being in the range of 10 or more and less than 70: 90 or less and greater than 30, and having a weight average molecular weight of 400,000 to 1,000,000,
   (2) dissolving the copolymerized aramid polymer in a solvent to prepare a spinning dope,
   (3) spinning the spinning dope through a spinneret into a coagulation bath to obtain a coagulated yarn;
   (4) washing the coagulated yarn in an aqueous washing bath and drawing it at a draw ratio in the range of 1.1 to 5.0 times in a boiling water bath to obtain a fiber;
   (5) subjecting the fiber to dry heat treatment in the range of 100 to 250 °C, and
   (6) after the dry heat treatment, heat-drawing the fiber at a draw ratio in the range of 2.0 to 10.0 times while heat-treating at 290 to 380 °C.
14. The production method according to matter 13 above, wherein the spinning dope comprises the copolymerized aramid polymer dissolved in the range of 5 to 30 mass% in an amide solvent and the coagulation bath contains the amide solvent in an amount of 1 to 20 mass%.
15. The production method according to matter 13 above, wherein the spinning dope comprises the copolymerized aramid polymer dissolved in the range of 5 to 30 mass% in concentrated sulfuric acid having a concentration of 95% or more and the coagulation bath contains water.
16. A heat-resistant high-toughness film, having a breaking strength of 80 to 150 MPa, an elongation at break of 5 to 30%, a glass transition temperature of 250 °C or higher, and a heat shrinkage at 300 °C of 5% or less, and comprising: a copolymerized aramid polymer containing three monomer units selected from the group consisting of meta-phenylenediamine, para-phenylenediamine, isophthaloyl, and terephthaloyl, or two monomer units of meta-phenylenediamine and terephthaloyl, or two monomer units of para-phenylenediamine and isophthaloyl.

### Advantageous Effects of Invention

The heat-resistant high-toughness fiber obtained by the present invention has a heat resistance that can withstand use in environments of 250 °C or higher, and at the same time, has an excellent balance of physical properties represented by a breaking strength of 3.5 to 15 cN/dtex and an elongation at break of 5 to 30%, and thus, can suitably be used in protective clothing applications that supplement, in addition to heat resistance, strength and flexibility, as well as rubber reinforcement applications that require elongation. Furthermore, the heat-resistant high-toughness film obtained by the present invention has an excellent balance of physical properties represented by a breaking strength of 80 to 150 MPa, an elongation at break of 5 to 30%, a glass transition temperature of 250 °C or higher, and a heat shrinkage at 300 °C of 5% or lower, and thus can be suitably used in applications where strength and elongation are required in a high temperature range.

### Description of Embodiments

The present invention will be described in detail below.

The heat-resistant high-toughness fiber of the present invention is characterized by a breaking strength of 3.5 to 15 cN/dtex, an elongation at break of 5 to 30%, and a melting point of 290 °C or higher. The polymer constituting such a heat-resistant high-toughness fiber is generally a wholly aromatic polyamide (hereinafter sometimes referred to as aramid), and in particular, contains a copolymer composed of a meta-type and/or para-type aromatic diamine component and a meta-type and/or para-type aromatic dicarboxylic acid component.

In the heat-resistant high-toughness fiber of the present invention, the wholly aromatic polyamide composed of a copolymerized aramid polymer is randomly copolymerized, and preferably, contains at least three monomer units selected from the group consisting of meta-phenylenediamine, para-phenylenediamine, isophthaloyl, and terephthaloyl. Examples of combinations of these monomer units are shown in Table 1 below.

Furthermore, the heat-resistant high-toughness film of the present invention contains three monomer units selected from the group consisting of meta-phenylenediamine, para-phenylenediamine, isophthaloyl, and terephthaloyl, or two monomer units, meta-phenylenediamine and terephthaloyl, or two monomer units, para-phenylenediamine and isophthaloyl. Combination examples 1 to 4, 6 and 7 of these monomer units are shown in Table 1 below.

**[Table 1]**

| | Meta-phenylenediamine | Para-phenylenediamine | Isophthaloyl monomer | Terephthaloyl monomer |
|---|---|---|---|---|
| Ex 1 | ○ | - | ○ | ○ |
| Ex 2 | - | ○ | ○ | ○ |
| Ex 3 | ○ | ○ | ○ | - |
| Ex 4 | ○ | ○ | - | ○ |
| Ex 5 | ○ | ○ | ○ | ○ |
| Ex 6 | ○ | - | - | ○ |
| Ex 7 | - | ○ | ○ | - |

Among the combination examples described above, in general, the heat-resistant high-toughness fiber preferably contains the three monomer units shown in examples 1 to 4, and depending on the application, may more preferably contain the four monomer units shown in example 5 or the three monomer units shown in Example 4.

Among the combination examples described above, the heat-resistant high-toughness film generally contains the three monomer units shown in Examples 1 and 4 and the two monomer units shown in Examples 6 and 7.

In the heat-resistant high-toughness fiber of the present invention, the molar ratio of monomer units of meta-phenylenediamine and/or isophthaloyl to monomer units of para-phenylenediamine and/or terephthaloyl is preferably in the range of 10 or more and less than 70: 90 or less and greater than 30.

In a first aspect of the heat-resistant high-toughness fiber according to the present invention, the fiber can have a breaking strength of 7 to 15 cN/dtex, an elongation at break of 10 to 30%, and a melting point of 290 °C or higher. It is preferable that the mol% of monomer units of meta-phenylenediamine and/or isophthaloyl be 40 or more and less than 70 of the total, and the mol% of monomer units of para-phenylenediamine and/or terephthaloyl be 60 or less and greater than 30 of the total, it is further preferable that the mol% of monomer units of meta-phenylenediamine and/or isophthaloyl be 50 or more and less than 70 of the total, and the mol% of monomer units of para-phenylenediamine and/or terephthaloyl be 50 or less and greater than 30 of the total, and it is particularly preferable that the mol% of monomer units of meta-phenylenediamine and/or isophthaloyl be 50 or more and less than 67 of the total, and the mol% of monomer units of para-phenylenediamine and/or terephthaloyl be 50 or less and greater than 33 of the total. When the mol% of monomer units of meta-phenylenediamine and/or isophthaloyl is 70 or more, the desired strength may not be achieved. Further, when the mol% of monomer units of meta-phenylenediamine and/or isophthaloyl is less than 40, the resulting polymer may not be dissolved in the amide solvent, which is described later, and may not be capable of being spun.

The breaking strength of the heat-resistant high-toughness fiber of the first aspect is 7 to 15 cN/dtex, and the lower limit is preferably 8.0 cN/dtex or more. When the breaking strength is less than 3.5 cN/dtex, high toughness, which is the object of the present invention, may be insufficient. The elongation at break of the heat-resistant high-toughness fiber of the first aspect is generally 10% to 30%, preferably 15% to 25%, and further preferably 20% to 25% or more. When the elongation at break is less than 10%, the elongation is not sufficient, which may result in insufficiently high toughness. Conversely, when the elongation at break exceeds 30%, sufficient strength may not be obtained.

It is necessary that the melting point of the heat-resistant high-toughness fiber, which is the first aspect, be 290 °C or higher, and it is preferably 300 °C or higher. When the melting point is lower than 290 °C, the performance as a heat-resistant fiber cannot be exhibited. Furthermore, in the heat-resistant high-toughness fiber of the first aspect, the dry heat dimensional change rate at 250 °C is preferably less than 2%, more preferably 1.5% or less, further preferably 1.0% or less, and particularly preferable 0.5% or less. When the dry heat dimensional change rate is 2% or more, the performance as a heat-resistant fiber may not be sufficiently exhibited.

In a second aspect of the heat-resistant high-toughness fiber according to the present invention, the fiber can have a breaking strength of 7.0 to 15.0 cN/dtex, a knot strength of 4.4 to 5.6 cN/dtex (42.3% to 50%), an elongation at break of 10 to 30%, and a melting point of 290 °C or higher. Examples of reports on high knot strength fibers include the following. For example, Japanese Unexamined Patent Publication (Kokai) No. 63-235521 (Patent Literature 4) reports a high-toughness para-aramid fiber having a strength of 21.4 g/de and a knot strength of 7.5 to 8.4 g/de (36 to 39%) by low temperature pre-drying and steaming para-oriented aramid fibers. Japanese Unexamined Patent Publication (Kokai) No. 5-9867 (Patent Literature 5) reports a method of obtaining a fiber having a strength of 22.5 to 23.4 g/de and a knot strength of 7.1 to 8.2 g/de (30 to 36%) by attaching silicon fine particles to the surface of a para-aramid fiber. Japanese Unexamined Patent Publication (Kokai) No. 2019-157285 (Patent Literature 6) reports a high-strength fiber for weaving and knitting having a strength of 20.2 cN/de and a knot strength of 7.8 cN/de (39%) or more by using a fiber treatment agent. However, all of these reports relate to para-aramid fibers, which have heat resistance but relatively low elastic moduli. The heat-resistant high-toughness fiber of the second aspect according to the present invention has heat resistance that can withstand use in environments of 250 °C or higher, and at the same time, has an excellent balance in terms of the combination of breaking strength, knot strength, and elongation at break described above, and can be suitably used in safety ropes and fall prevention materials.

In the second aspect of the heat-resistant high-toughness fiber, it is preferable that the mol% of monomer units of meta-phenylenediamine and/or isophthaloyl be 50 or more and less than 68 of the total, and the mol% of monomer units of para-phenylenediamine and/or terephthaloyl be 50 or less and greater than 32 of the total, it is further preferable that the mol% of monomer units of meta-phenylenediamine and/or isophthaloyl be 55 or more and less than 63 of the total, and the mol% of monomer units of para-phenylenediamine and/or terephthaloyl be 45 or less and greater than 37 of the total, and it is particularly preferable that the mol% of monomer units of meta-phenylenediamine and/or isophthaloyl be 55 or more and less than 60 of the total, and the mol% of monomer units of para-phenylenediamine and/or terephthaloyl be 45 or less and greater than 40 of the total. When the mol% of monomer units of meta-phenylenediamine and/or isophthaloyl is greater than 68, the desired knot strength may not be achieved. Further, when the mol% of monomer units of meta-phenylenediamine and/or isophthaloyl is less than 50, the resulting polymer may not be dissolved in the amide solvent, which is described later, and may not be capable of being spun.

The second aspect of the heat-resistant high-toughness fiber has a knot strength of 4.4 to 5.6 cN/dtex (42.3% to 50%), and preferably 4.9 to 5.6 cN/dtex (45% to 50%). When the knot strength is less than 4.4 cN/dtex, the desired strength may not be obtained. Conversely, when the knot strength exceeds 5.6 cN/dtex, the objective elongation at break may not be obtained. Note that the parenthesized percentages (%) for knot strength described herein indicate the ratio of knot strength to breaking strength, and the higher the ratio of knot strength, the better the balance between flexibility and strength of the fiber.

The breaking strength of the second aspect of the heat-resistant high-toughness fiber is 7.0 to 15.0 cN/dtex, and the lower limit thereof is more preferably 8.0 cN/dtex or more. When the breaking strength is less than 7.0 cN/dtex, the desired strength may not be obtained. The elongation at break of the second aspect of the heat-resistant high-toughness fiber is generally 10% to 30%, preferably 15% to 25%, and more preferably 20% to 25%. When the elongation at break is less than 10%, it may not be sufficient for the well-balanced physical properties, which are the objective of the present invention. When the elongation at break exceeds 30%, sufficient strength may not be obtained.

The melting point of the second aspect of the heat-resistant high-toughness fiber is generally 290 °C or higher, and preferably 300 °C or higher. When the melting point is lower than 290 °C, the performance as a heat-resistant fiber may not be exhibited. In the second aspect of the heat-resistant high-toughness fiber, the dry heat dimensional change rate at 250 °C is generally preferably less than 2%, more preferably 1.5% or less, further preferably 1.0% or less, and particularly preferably 0.5% or less. When the dry heat dimensional change rate is 2% or more, the performance as a heat-resistant fiber may not be sufficiently exhibited.

The heat-resistant high-toughness fiber of the second aspect preferably has a weight average molecular weight of 400,000 to 1,000,000 in accordance with the analysis method described later. When the weight average molecular weight of the heat-resistant high-toughness fiber is less than 400,000, the breaking strength may be significantly reduced. Furthermore, when the molecular weight of the heat-resistant high-toughness fiber exceeds 1,000,000, the viscosity is excessively high when the wholly aromatic polyamide solution is spun from a spinneret, making it difficult to handle, which may necessitate special equipment.

Since the second aspect of the heat-resistant high-toughness fiber has not only strength but also excellent knot strength and well-balanced physical properties, and has heat resistance and flame retardancy, it can be effectively used for fall prevention materials for fall prevention measures for catching structures such as concrete structures, earth and sand, snow, etc., as well as fiber products for ensuring the safety of workers working at heights such as safety ropes and safety nets. The second aspect of the heat-resistant high-toughness fiber, which is included in applications such as the fall prevention materials, safety rope, and safety nets described above, is preferably, relative to the total mass, 30 to 100 mass%, more preferably 50 to 100 mass%, further preferably 80 to 100 mass%, and most preferably 100%. When the content of the copolymer aramid fiber is less than 50%, the characteristics of the heat-resistant high-toughness fiber of the present invention may not be sufficiently exhibited.

In a third aspect of the heat-resistant high-toughness fiber according to the present invention, the fiber can have a breaking strength of 8.0 cN/dex or more and less than 15.0 cN/dtex, an elongation at break of greater than 5.0% and 20.0% or less, and dry heat dimensional change rate at 300 °C of less than 5%. It is preferable that the mol% of monomer units of meta-phenylenediamine and/or isophthaloyl be 10 or more and less than 40 of the total, and the mol% of monomer units of para-phenylenediamine and/or terephthaloyl be 90 or less and greater than 60 of the total, and it is further preferable that the mol% of monomer units of meta-phenylenediamine and/or isophthaloyl be 20 or more and less than 40 of the total, and the mol% of monomer units of para-phenylenediamine and/or terephthaloyl be 80 or less and greater than 60 of the total. When both monomer units of meta-phenylenediamine and isophthaloyl are present, it is the sum of these (monomer units of meta-phenylenediamine and isophthaloyl). When monomer units of both para-phenylenediamine and terephthaloyl are present, it is the sum of these (monomer units of para-phenylenediamine and terephthaloyl). When the mol% of monomer units of meta-phenylenediamine and/or isophthaloyl is 40 or more, the desired strength and thermal stability may not be achieved. Furthermore, when the mol% of monomer units of meta-phenylenediamine and/or isophthaloyl is less than 10, the resulting polymer may not be dissolved in the amide solvent, which is described later, and may not be capable of being spun.

The breaking strength of the heat-resistant high-toughness fiber of the third aspect is generally 8.0 cN/dtex or more and less than 15.0 cN/dtex, and the lower limit thereof is more preferably 9.0 cN/dtex or more. When the breaking strength is less than 8.0 cN/dtex, the strength serving as the high toughness, which is the object of the present invention, may be insufficient. The elongation at break is generally greater than 5.0% and 20% or less, preferably 7.0% to 15.0%, and more preferably 10.0% to 15.0%. When the elongation at break is less than 5.0%, the elongation is insufficient and sufficiently high toughness may not be exhibited. Conversely, when the elongation at break exceeds 20.0%, sufficient strength may not be obtained. The dry heat dimensional change rate at 300 °C of the heat-resistant high-toughness fiber of the third aspect is generally less than 5%, and preferably 4% or less. When the dry heat dimensional change rate is 5% or more, the sufficient performance as a heat-resistant fiber may not be exhibited.

In a fourth aspect of the heat-resistant high-toughness fiber according to the present invention, the fibers contain electrically conductive fine particles and can have an electrical resistivity of 10³ Ωcm or less, a breaking strength of 3.5 to 10 cN/dtex, an elongation at break of 10 to 30%, and a melting point of 290 °C or higher. In general, fibers having electrical conductivity can be suitably used in the case of imparting static elimination performance in addition to the effect of imparting electrical conductivity depending on the method of use. Due to these properties, electrically conductive fibers are mainly used as general-purpose fibers and applied to clothing and industrial applications, and are still some of the most important functional fibers today. Various methods for producing electrically conductive fibers have been disclosed, and examples of methods thereof include plating the fiber surface with a metal to impart electrical conductivity, and filling the raw material polymer with electrically conductive particles and spinning to provide electrical conductivity. Heat resistance is one of the performances required in material development. For example, fibers composed of wholly aromatic polyamide (sometimes referred to as aramid fibers) are particularly useful as high-strength, heat-resistant, and flame-retardant fibers. Electrically conductive fibers that have been widely used to date include nylon and acrylic fibers, which may not be suitable for applications that require heat resistance. However, if electrical conductivity can be imparted to heat-resistant fibers such as wholly aromatic polyamides, the range of applications can be expected to expand. Attempts to impart electrical conductivity to such wholly aromatic polyamide fibers have been disclosed. For example, in Japanese Unexamined Patent Publication (Kokai) No. 2-216264 (Patent Literature 7) and Japanese Unexamined Patent Publication (Kokai) No. 2006-2213 (Patent Literature 8), the surface of an aramid fiber is coated with copper sulfide or silver to achieve electrical conductivity. Japanese Unexamined Patent Publication (Kokai) No. 2006-342471 (Patent Literature 9) discloses a method for obtaining electrically conductive para-aramid fibers by adding carbon nanotubes and electrically conductive fine particles other than the carbon nanotubes to a spinning solution and spinning. However, the method of coating the fiber surface to impart electrical conductivity requires surface treatment, which poses a problem in terms of productivity, and in terms of quality, there is a problem in durability due to wear. In the method of adding and mixing conductive fine particles into the resin and spinning, since the conductive fine particles are retained inside the fiber, though the durability of electrical conductivity is relatively high, this leads to deterioration of the mechanical properties of the fiber, whereby sufficient strength cannot be obtained. Since the electrically conductive heat-resistant high-toughness fiber of the fourth aspect has heat resistance that can withstand use in environments of 250 °C or higher and at the same time, in addition to the above breaking strength and elongation at break, exhibits a high electrical conductivity in terms of electrical resistivity of 10³ Ωcm or less, for example, it can be suitably used in protective clothing applications which require strength, flexibility, and high electrostatic properties.

In the heat-resistant high-toughness fiber of the fourth aspect according to the present invention, it is preferable that the mol% of monomer units of meta-phenylenediamine and/or isophthaloyl be 50 or more and less than 70 of the total, and the mol% of monomer units of para-phenylenediamine and/or terephthaloyl be 50 or less and greater than 30 of the total, and it is more preferable that the mol% of monomer units of meta-phenylenediamine and/or isophthaloyl be 50 or more and less than 67 of the total, and the mol% of monomer units of para-phenylenediamine and/or terephthaloyl be 50 or less and greater than 33 of the total. When the mol% of monomer units of meta-phenylenediamine and/or isophthaloyl is 70 or more, the desired strength may not be achieved. Conversely, when the mol% of monomer units of meta-phenylenediamine and/or isophthaloyl is less than 50, the obtained polymer may not dissolve in the amide solvent, which is described later, and may not be capable of being spun.

The electrical resistivity of the heat-resistant high-toughness fiber of the fourth aspect is generally 10³ Ωcm or less, more preferably 700 Ωcm or less, further preferably 500 Ωcm or less, and most preferably 200 Ωcm or less. Though a lower electrical resistivity is preferable because sufficient electrostatic properties can be obtained, it is preferable to adjust the electrical resistivity appropriately in view of the balance of the desired strength, elongation, and spinnability, as described later.

The breaking strength of the heat-resistant high-toughness fiber of the fourth aspect is generally 3.5 to 10 cN/dtex, preferably 4.0 to 10.0 cN/dtex, and more preferably 4.0 to 7.0 cN/dtex. When the breaking strength is less than 3.5 cN/dtex, the strength is insufficient for applications such as protective clothing, which is the objective of the present invention. Furthermore, the elongation at break of the electrically conductive heat-resistant high-toughness fiber of the present invention is 10% to 30%, and more preferably 10% to 20%. When the elongation at break is less than 10%, the elongation is insufficient and sufficient flexibility may not be exhibited. The melting point of the electrically conductive heat-resistant high-toughness fiber of the present invention is generally 290 °C or higher, and preferably 300 °C or higher. When the melting point is lower than 290 °C, sufficient performance as a heat-resistant fiber may not be exhibited.

The heat-resistant high-toughness film according to the present invention, in general, has a breaking strength of 80 to 150 MPa, an elongation at break of 5 to 30%, a glass transition temperature of 250 °C or higher, and a heat shrinkage at 300 °C of 5% or lower. The breaking strength is generally 80 to 150 MPa, and preferably 100 to 150 MPa. When the breaking strength is less than 80 MPa, the strength for use as a heat-resistant film is insufficient. The heat-resistant high-toughness film of the present invention has an elongation at break of 5% to 30%, and more preferably 5% to 20%. When the elongation at break is less than 5%, the elongation is insufficient and sufficient flexibility may not be exhibited. The glass transition temperature is generally 250 °C or higher, and preferably 280 °C or higher. When the glass transition temperature is lower than 250 °C, sufficient performance as a heat-resistant film may not be exhibited. The dry heat dimensional change rate at 300 °C is generally 5% or less, and preferably 4% or less. When the dry heat dimensional change rate exceeds 5%, sufficient performance as a heat-resistant film may not be exhibited.

The heat-resistant high-toughness film according to the present invention contains a copolymerized aramid polymer containing, in general, three monomer units selected from the group consisting of meta-phenylenediamine, para-phenylenediamine, isophthaloyl, and terephthaloyl, or two monomer units of meta-phenylenediamine and terephthaloyl, or two monomer units of para-phenylenediamine and isophthaloyl. Among the combination examples of Table 1, in general, those containing three monomer units shown in Examples 1 to 4 and those containing two monomer units shown in Examples 6 and 7 are preferable, and those containing two monomer units shown in Examples 6 and 7 may be more preferable.

It is preferable that the mol% of monomer units of meta-phenylenediamine and/or isophthaloyl be 10 or more and less than 60 of the total, and the mol% of monomer units of para-phenylenediamine and/or terephthaloyl be 90 or less and greater than 40 of the total, and it is more preferable that the mol% of monomer units of meta-phenylenediamine and/or isophthaloyl be 20 or more and less than 60 of the total, and the mol% of monomer units of para-phenylenediamine and/or terephthaloyl be 80 or less and greater than 40 of the total. When the mol% of monomer units of meta-phenylenediamine and/or isophthaloyl is 60 or more, the desired strength may not be achieved. Conversely, when the mol% of monomer units of meta-phenylenediamine and/or isophthaloyl is less than 10, the obtained polymer may not dissolve in the amide solvent, which is described later, whereby film formation may not be possible.

Examples of the aromatic diamine components serving as the raw material for the wholly aromatic polyamides include meta-phenylenediamine, para-phenylenediamine, 3,4'-diaminodiphenyl ether, and 3,4'-diaminodiphenyl sulfone, and derivatives having substituents such as halogens and C₁₋₃ alkyl on the aromatic ring thereof.

Examples of raw materials for the aromatic dicarboxylic acid component constituting the wholly aromatic polyamide of the present invention include aromatic dicarboxylic acid halides. Examples of meta-type aromatic dicarboxylic acid halides include isophthaloyl halides such as isophthaloyl chloride and isophthaloyl bromide, and derivatives comprising these aromatic rings and substituents such as halogens and C₁₋₃ alkoxy groups thereon. Similarly, examples of para-type aromatic dicarboxylic acid halides include terephthaloyl halides such as terephthaloyl chloride and terephthaloyl bromide, and derivatives comprising these aromatic rings and substituents such as halogens and C₁₋₃ alkoxy groups thereon.

Examples of the method for polymerizing the wholly aromatic polyamide of the present invention include, but are not limited to, a method of isolating a powder of a polymetaphenylene isophthalamide polymer by contacting an organic solvent system (for example, tetrahydrofuran) which is not a good solvent for the resulting polyamide containing meta-phenylenediamine and isophthaloyl chloride with an aqueous system containing an inorganic acid acceptor and a soluble neutral salt (interfacial polymerization, Japanese Examined Patent Publication (Kokoku) No. 47-10863), and a method of solution polymerization of the diamine and an acid chloride in an amide solvent, followed by neutralization with calcium hydroxide or calcium oxide (solution polymerization, Japanese Unexamined Patent Publication (Kokai) No. 8-074121, Japanese Unexamined Patent Publication (Kokai) No. 10-88421).

The weight average molecular weight of the wholly aromatic polyamide copolymer (also referred to as copolymerized aramid polymer) used in the present invention is preferably 400,000 to 1,000,000 according to the analysis method described later, from the viewpoint of forming fibers having a breaking strength which can withstand practical use. When the weight average molecular weight is less than 400,000, not only is the breaking strength significantly reduced, but also stable spinning may not be possible. Furthermore, if the molecular weight exceeds 1,000,000, when preparing and spinning the wholly aromatic polyamide solution, which will be described later, the viscosity is excessively high, whereby handling is difficult, sometimes requiring dedicated equipment.

A mixture of a low-molecular-weight polymer and a high-molecular-weight polymer can be used as the polymer within the molecular weight range defined in the present invention, as long as the total molecular weight is within the defined molecular weight range by adjusting the mixing ratio. For example, when a polymer having a weight average molecular weight of 200,000 and a polymer having a weight average molecular weight of 800,000 are mixed, and the mixed polymer has a weight average molecular weight of 600,000, which is within the molecular weight range defined in the present invention, the usage of such a mixture presents no problems.

The wholly aromatic polyamide obtained by the production method described above is used to produce the wholly aromatic polyamide fiber of the present invention through the after-mentioned steps of spinning solution preparation, spinning and coagulation, washing, boiling water drawing, dry heat treatment, and hot drawing.

### [Spinning Solution Preparation Step]

In the spinning solution preparation step, the wholly aromatic polyamide of the present invention is dissolved in a solvent to prepare a spinning solution (also referred to as a dope or a spinning dope). When preparing the spinning solution, an amide solvent is usually used, and examples thereof include N-methyl-2-pyrrolidone (NMP), dimethylformamide (DMF) and dimethylacetamide (DMAc). Among these, NMP or DMAc is preferably used from the viewpoint of solubility and handling safety. Concentrated sulfuric acid can also be used as a solvent of the present invention. When concentrated sulfuric acid is used, the concentration is preferably 95% or higher, and more preferably 98% or higher. When concentrated sulfuric acid is used, air-gap spinning using water can also be performed in the coagulation step, which will be described later.

As the concentration of the solution, an appropriate concentration may be appropriately selected from the viewpoint of the coagulation rate in the subsequent spinning/coagulation step and the solubility of the polymer, and the concentration is usually required to be within the range of 5 to 30 mass%. In particular, in the first, second, and fourth aspects of the present invention, the solution concentration is preferably in the range of 10 to 30 mass%, and more preferably in the range of 15 to 25 mass% to achieve stable spinning. Conversely, in the third aspect of the present invention, the solution concentration is preferably in the range of 5 to 25 mass%, and more preferably in the range of 7 to 20 mass% in order to achieve stable spinning.

When producing the heat-resistant high-toughness fiber of the fourth aspect of the present invention, it is preferable to add 6 to 40 mass% of electrically conductive fine particles to the wholly aromatic polyamide constituting the fiber. Such an added amount is more preferably 10 to 35 mass%, and further preferably 20 to 30 mass%. When the concentration of the electrically conductive fine particles is less than 6 mass%, the desired electrical conductivity cannot be exhibited, and when it exceeds 40 mass%, the desired strength may not be obtained. Electrically conductive fine particles are substances that themselves exhibit electrical conductivity, such as metal fine particles, metal oxides, or carbon black (also referred to as electrically conductive carbon black), and though the fine particles are not particularly limited, as long as they do not inhibit the formation of the fiber, electrically conductive carbon black is preferable in the present invention from the standpoint of production technology.

The electrically conductive carbon black preferably has a surface specific resistance of 10 to 10⁸ S2, more preferably 10² to 10⁶ Q, and further preferably 10³ to 10⁵ S2, when measured under the conditions of a temperature of 20 °C and a humidity of 65%. A surface specific resistance of electrically conductive carbon black within the above range is preferable for obtaining an electrically conductive heat-resistant high-toughness fiber having electrical resistivity, which is the object of the present invention.

Regarding the surface specific resistance (S2) of the electrically conductive carbon black, 25% of electrically conductive carbon black was added to the polymer solution obtained in Example 10, which is described later, and after applying the solution to a glass cloth with a 3 ml applicator, it was washed with water and dried followed by heat treatment in an electric furnace at 330 °C for 2 minutes to obtain a test piece, and the surface specific resistance was measured using a Hiresta UP (manufactured by Mitsubishi Chemical Corporation).

There is no particular problem if the particle size of the electrically conductive carbon black is sufficiently small relative to the cross-section of the fiber, and the particle size is preferably in the range of 5 to 500 nm, and more preferably in the range of 10 to 50 nm. When the particle size is larger than 500 nm, the fiber strength is reduced, and when the particle size is less than 5 nm, the dispersibility deteriorates due to self-aggregation.

In the present invention, an inorganic salt may be introduced into the dope, and it is preferable that the dope contain 0 to 20 mass% of the inorganic salt. To obtain stable spinnability, 0 to 10 mass% of the inorganic salt is more preferable.

When the inorganic salt content exceeds 20 mass%, the coagulation rate will become excessively high, whereby many voids will be formed in the fiber, making it impossible to obtain a fiber with the desired physical properties. As the inorganic salt, a chloride salt such as calcium chloride, magnesium chloride, or lithium chloride is preferably used.

### [Spinning/Coagulation Step]

In the spinning/coagulation step, the dope obtained as described above is spun into a coagulating liquid and coagulated. The spinning device is not particularly limited, and a conventionally-known wet spinning device can be used. The number of spinning holes, the diameter of spinning holes, the layout state and the like of the spinneret are not particularly limited as long as they can be stably wet-spun, and for example, a multi-hole spinneret for staple fibers having 10 to 30,000 spinning holes and a spinning hole diameter of 0.03 to 0.2 mm can be used.

The temperature of the dope during spinning from the spinneret is preferably in the range of 20 to 90 °C, and more preferably 70 to 90 °C.

The coagulation bath used to obtain the fiber of the present invention is an aqueous solution containing 1 to 20 mass%, and preferably 3 to 15 mass%, of an amide solvent. The temperature of this aqueous solution is preferably in the range of 50 to 90 °C. When concentrated sulfuric acid is used as the solvent in the spinning solution preparation step, water can be used as the coagulation bath, and the coagulation bath temperature in that case is preferably in the range of 0 to 20 °C.

When an amide solvent is used in the coagulation bath, the coagulation bath can contain an inorganic salt such as calcium chloride or magnesium chloride in an amount of preferably 30 mass% or more, and more preferably 35 to 45 mass%.

As described above, the dope is spun from the spinnerets into the coagulation liquid and passed through a coagulation bath to obtain a coagulated yarn.

### [Washing Step, Boiling Water Drawing Step]

The obtained coagulated yarn is thoroughly washed in an aqueous washing bath and sent to a boiling water drawing step. The draw ratio in the boiling water drawing bath should be in the range of 1.1 to 5.0 times, and more preferably in the range of 1.1 to 3.0 times. The strength of the ultimately obtained fiber can be ensured by performing drawing within the range of the draw ratio to enhance the molecular chain orientation.

### [Dry Heat Treatment Step]

A dry heat treatment step is preferably carried out on the fiber that has undergone the washing and drawing steps described above. In the dry heat treatment process, the fiber washed in the above washing step are subjected to a dry heat treatment within a range of 100 to 250 °C, and the dry heat treatment is preferably carried out in the range of 100 to 200 °C. It is preferable to carry out the dry heat treatment under a constant length. The temperature of the dry heat treatment described above refers to the set temperature of the fiber heating means such as a hot plate or heating roller.

### [Hot Drawing Step]

In the present invention, the fiber subjected to the dry heat treatment is subjected to a hot drawing step. In the hot drawing step, drawing is performed while heat-treating in the range of 290 to 380 °C. The treatment temperature is preferably in the range of 290 to 350 °C. When the temperature is lower than 290 °C, high-ratio drawing cannot be performed, and when it exceeds 380 °C, discoloration or breakage of the fiber may occur. In the hot drawing step, the draw ratio should be in the range of 2.0 to 10.0 times, and preferably 3.0 to 10.0 times. The temperature of the hot drawing treatment refers to the set temperature of the fiber heating means such as a hot plate or heating roller.

The washing step, boiling water drawing step, and hot drawing step described above are generally common to both amide systems and sulfuric acid systems.

The total draw ratio of the boiling water draw ratio and the hot draw ratio of the present invention is generally preferably 5 to 7 times or more. When the total draw ratio is less than 5 times, the desired strength and/or electrical conductivity may not be achieved. A person skilled in the art can appropriately adjust the boiling water draw ratio and the hot draw ratio in consideration of the conditions of the steps.

### [Film Production Method]

Regarding the heat-resistant high-toughness film of the present invention, the undiluted polymer solution containing the copolymerized wholly aromatic polyamide obtained by the production method described above is discharged into a solvent such as an alcohol or water, reprecipitated, and separated, whereby it can be dissolved again in a solvent and used for forming a film. It is preferable to use the undiluted polymer solution as-is or after adjusting the concentration appropriately after polymerization for film formation. The concentration at this time can be adjusted by concentration or dilution with a solvent. As such a solvent, those as exemplified as the polymerization solvent can be used.

The film is preferably produced by a solution film-forming method. Examples of solution film-forming methods include a dry-wet method, a dry method, and a wet method, and the dry-wet method and the dry method are preferable since a film having suitable surface properties can be obtained.

When the film is formed by the wet method, it is preferable to use a method wherein the undiluted solution is directly extruded from a spinneret into a film-forming bath, or is once extruded onto a support such as a drum and introduced into a wet bath together with the support. This bath is generally composed of an aqueous medium, and may contain an organic solvent, and an inorganic salt in addition to water. Salts and organic solvents contained in the film can be extracted by passing the film through a wet bath. Though the time for passing through a wet bath depends on the thickness of the film, it is preferably 10 seconds to 30 minutes.

In the case of a drawn film, the polymer exiting the wet bath may be drawn longitudinally, then dried, and then drawn transversely and heat-treated. In such a case, these treatments are generally preferably carried out at 100 to 500 °C for a total time of 1 second to 30 minutes.

When forming the film by a dry-wet method, the undiluted solution is extruded from a die onto a support such as a drum or an endless belt to form a thin film, and then the solvent is scattered from the thin film layer and dried until the thin film has self-retaining properties. The drying conditions are preferably room temperature to 300 °C and within 60 minutes. After the drying process, the film is peeled from the support and introduced into a wet process, where desalting and solvent removal are carried out in the same manner as in the wet process described above. In the case of a drawn film, further drawing, drying and heat treatment may be carried out.

When a dry method is adopted, the film is dried on a drum or endless belt, and the self-retaining film is peeled from the support. In the case of a drawn film, drying, drawing, and heat treatment may be performed to remove the residual solvent. These treatments are preferably carried out at 100 to 500 °C for 1 second to 30 minutes in total.

### Examples

The present invention will be described in detail below by way of Examples and Comparative Examples. The scope of the present invention is not limited to the following Examples and Comparative Examples. Note that the physical property values of the Examples and Comparative Examples were measured by the following methods.

### [Weight Average Molecular Weight Mw]

In accordance with JIS-K-7252, analysis was performed using a high-performance liquid chromatography device equipped with a column for size exclusion chromatography, and dimethylformamide (containing 0.01 mol% lithium chloride) was used as the developing solvent. As a standard molecular weight sample, a Sigma-Aldrich polystyrene set (peak top molecular weight Mp = 400 to 2,000,000) was used.

### [Single Fiber Fineness]

In accordance with JIS-L-1015, measurement was carried out in accordance with the method A of regular Fineness and expressed in apparent Fineness.

### [Fiber Breaking Strength, Elongation at Break]

Using a tensile tester (model: 5565 manufactured by Instron Corporation), measurement of fiber breaking strength and elongation at break was carried out under the following conditions according to in accordance with JIS-L-1015.

### (Measurement Conditions)

Grip interval: 20 mm
Initial load: 0.044 cN (1/20 g/dtex)
Tensile speed: 20 mm/min

### [Knot Strength]

Using a tensile tester (model: 5565 manufactured by Instron Corporation), knot strength was measured according to JIS-L-1013:2010 chemical fiber filament yarn test method 8.6.1 (standard time test).

### [Fiber Electrical Resistivity]

Using an SM-8210 ultra-megohmmeter manufactured by Toa Denpa Kogyo Co., Ltd., measurement was carried out in an atmosphere having a relative humidity of 65 RH%. The fiber sample length is set to 10 cm (L (cm)), a voltage of 0.5 KV is applied to this sample length, the electrical resistivity R (S2) at that time is measured, and electrical resistivity is determined from ρ (Qcm) = R × (S / L), where S (cm²) is the cross-sectional area of the conductive yarn. In the Examples and Comparative Examples of the present invention, S is considered to be the fiber density d = 1.39 g/cm³, and D is determined from S = D / (1000000 × d), where the total Fineness value (dtex) is used as-is as mass. The number of repeated measurements at this time is five, and the average value is used as the electrical resistivity.

### [Dry Heat Dimensional Change Rate]

In accordance with JIS-L-1013, measurement is carried out in accordance with method B to obtain the dimensional change rate at 250 °C or 300 °C.

### [Fiber Melting Point]

The melting point of the fiber is determined by thermomechanical analysis in accordance with JIS-K-7197. Among the obtained sample peaks, the melting point is defined as the apex temperature of the peak detected on the high temperature side or the temperature at which peak detection became impossible due to dissolution of the fiber.

### [Film Breaking Strength, Elongation at Break]

The maximum stress during the tensile test of the film is measured in accordance with JIS K 7127 using an A&D TENSILON, and the value at which the stress and elongation were maximum is recorded. The test sample has a width of 10 mm and a length of 50 mm, and the tensile speed is 20 mm/min.

### [Film Glass Transition Temperature, Heat Shrinkage]

The softening point and heat shrinkage of the film are measured in accordance with JIS K 7196 and JIS K 7197 using a thermomechanical analyzer TMA manufactured by Hitachi High-Tech Science.

### [Example 1]

A copolymerized aramid polymer powder containing 67 mol% of monomer units of meta-phenylenediamine and isophthaloyl and 33 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 2:1. Both meta-phenylenediamine and para-phenylenediamine were used as amine monomers so as to achieve a mass ratio of 2:1. The weight average molecular weight was 800,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 16% and 3%, respectively, relative to the polymer solution.

This polymer solution was heated to 85 °C and spun as a spinning dope by discharging it into a coagulation bath at 85 °C from a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.4 times in boiling water at 90 °C, then immersed in hot water at 90 °C for 40 seconds and washed.

Next, after being wound around a roller having a surface temperature of 170 °C and subjected to a dry heat treatment, the yarn was drawn 4.5 times on a hot plate having a surface temperature of 325 °C to obtain a wholly aromatic polyamide fiber. The obtained fiber had a Fineness of 1.3 dtex, a breaking strength of 10.4 cN/dtex, an elongation at break of 23%, a melting point of 307 °C, and a dry heat dimensional change rate at 250 °C of 1.00%.

### [Example 2]

A copolymerized aramid polymer powder containing 60 mol% of monomer units of meta-phenylenediamine and isophthaloyl and 40 mol% of monomer units of para-phenylenediamine and terephthaloyl based on the total thereof was synthesized by interfacial polymerization in accordance with Example 1. At this time, both isophthaloyl chloride and terephthaloyl chloride were used as acid chloride monomers so as to achieve a mass ratio of 3:2. Both meta-phenylenediamine and para-phenylenediamine were used as amine monomers so as to achieve a mass ratio of 3:2. The weight average molecular weight was 640,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 16% and 3%, respectively, relative to the polymer solution.

This polymer solution was heated to 85 °C and spun as a spinning dope into a coagulation bath at 85 °C through a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.5 times in boiling water at 90 °C, then immersed in hot water at 90 °C for 40 seconds and washed. Next, after being wound around a roller having a surface temperature of 170 °C and subjected to a dry heat treatment, the yarn was drawn 3.5 times on a hot plate having a surface temperature of 330 °C to obtain a wholly aromatic polyamide fiber. The obtained fiber had a Fineness of 1.8 dtex, a breaking strength of 9.2 cN/dtex, an elongation at break of 22%, a melting point of 319 °C, and a dry heat dimensional change rate at 250 °C of 0.70%.

### [Example 3]

A copolymerized aramid polymer powder containing 56 mol% of monomer units of meta-phenylenediamine and isophthaloyl and 44 mol% of monomer units of para-phenylenediamine and terephthaloyl based on the total thereof was synthesized by interfacial polymerization in accordance with Example 1. At this time, both isophthaloyl chloride and terephthaloyl chloride were used as acid chloride monomers so as to achieve a mass ratio of 5:4. Both meta-phenylenediamine and para-phenylenediamine were used as amine monomers so as to achieve a mass ratio of 5:4. The weight average molecular weight was 450,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 20% and 2%, respectively, relative to the polymer solution.

This polymer solution was heated to 85 °C and spun as a spinning dope into a coagulation bath at 85 °C through a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.4 times in boiling water at 90 °C, then immersed in hot water at 90 °C for 40 seconds and washed.

Next, after being wound around a roller having a surface temperature of 170 °C and subjected to a dry heat treatment, the yarn was drawn 4.0 times on a hot plate having a surface temperature of 315 °C to obtain a wholly aromatic polyamide fiber. The obtained fiber had a Fineness of 1.54 dtex, a breaking strength of 11.1 cN/dtex, an elongation at break of 24%, a melting point of 313 °C, and a dry heat dimensional change rate at 250 °C of 0.30%.

### [Comparative Example 1]

A copolymerized aramid polymer powder containing 75 mol% of monomer units of meta-phenylenediamine and isophthaloyl and 25 mol% of monomer units of para-phenylenediamine and terephthaloyl based on the total thereof was synthesized by interfacial polymerization in accordance with Example 1. At this time, both isophthaloyl chloride and terephthaloyl chloride were used as acid chloride monomers so as to achieve a mass ratio of 3:1. Both meta-phenylenediamine and para-phenylenediamine were used as amine monomers so as to achieve a mass ratio of 3:1. The weight average molecular weight was 610,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 21% and 3%, respectively, relative to the polymer solution.

This polymer solution was spun under the conditions of Example 1 to obtain a wholly aromatic polyamide fiber. At this time, the boiling water draw ratio was 2.4 times and the hot plate draw ratio was 3.0 times. The obtained fiber had a Fineness of 1.7 dtex, a breaking strength of 4.6 cN/dtex, an elongation at break of 33%, a melting point of 333 °C, and a dry heat dimensional change rate at 250 °C of 0.87%.

### [Comparative Example 2]

A copolymerized aramid polymer powder containing 33 mol% of monomer units of meta-phenylenediamine and isophthaloyl and 67 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 1:2. Both meta-phenylenediamine and para-phenylenediamine were used as amine monomers so as to achieve a mass ratio of 1:2. The polymer could not be spun because it did not exhibit good solubility in solvents such as NMP.

### [Comparative Example 3]

The physical properties of a wholly aromatic polyamide fiber ("Teijinconex^{™}" manufactured by Teijin Limited) containing 100 mol% of monomer units of meta-phenylenediamine and isophthaloyl based on the total thereof were measured, and the Fineness was 2.2 dtex, the breaking strength was 4.9 cN/dtex, the elongation at break was 40%, the melting point could not be measured (400 °C or higher), and the dry heat dimensional change rate at 250 °C was 0.20%.

### [Comparative Example 4]

The physical properties of a wholly aromatic polyamide fiber ("Twaron^{™}" manufactured by Teijin Limited) containing 100 mol% of monomer units of para-phenylenediamine and terephthaloyl were measured, and the Fineness was 2.0 dtex, the breaking strength was 21 cN/dtex, the elongation at break was 3%, the melting point could not be measured (400 °C or higher), and the dry heat dimensional change rate at 250 °C was 0%.

The physical properties of the fibers obtained in Examples 1 to 3 and Comparative Examples 1 to 4 are shown in Table 2.

**[Table 2]**

| | Unit | Ex 1 | Ex 2 | Ex 3 | Comp Ex 1 | Comp Ex 2 | Comp Ex 3 | Comp Ex 4 |
|---|---|---|---|---|---|---|---|---|
| Ratio of monomer units of meta-phenylenediamine and/or isophthaloyl | mol% | 67 | 60 | 56 | 75 | 33 | 100 | 0 |
| Fineness | dtex | 1.3 | 1.8 | 1.54 | 1.7 | Could not be spun | 2.2 | 2.0 |
| Fiber breaking strength | cN/dtex | 10.4 | 9.2 | 11.1 | 4.6 | Could not be spun | 4.9 | 20 |
| Fiber elongation at break | % | 23 | 22 | 24 | 33 | Could not be spun | 40 | 3 |
| Dimensional change rate at 250 °C | % | 1.00 | 0.70 | 0.30 | 0.87 | Could not be spun | 0.20 | 0 |
| Fiber melting point | °C | 307 | 319 | 313 | 333 | Could not be spun | >400 | >400 |

### [Example 4]

A copolymerized aramid polymer powder containing 67 mol% of monomer units of meta-phenylenediamine and isophthaloyl and 33 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 2:1. Both meta-phenylenediamine and para-phenylenediamine were used as amine monomers so as to achieve a mass ratio of 2:1. The weight average molecular weight was 800,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 16% and 3%, respectively, relative to the polymer solution.

This polymer solution was heated to 85 °C and spun as a spinning dope by discharging it into a coagulation bath at 85 °C from a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.4 times in boiling water at 90 °C, then immersed in hot water at 90 °C for 40 seconds and washed.

Next, after being wound around a roller having a surface temperature of 170 °C and subjected to a dry heat treatment, the yarn was drawn 4.5 times on a hot plate having a surface temperature of 325 °C to obtain a wholly aromatic polyamide fiber. The obtained fiber had a weight average molecular weight of 800,000, a Fineness of 1.3 dtex, a breaking strength of 10.4 cN/dtex, a knot strength of 4.4 cN/dtex, an elongation at break of 23%, a melting point of 307 °C, and a dry heat dimensional change rate at 250 °C of 1.00%.

### [Example 5]

A copolymerized aramid polymer powder containing 56 mol% of monomer units of meta-phenylenediamine and isophthaloyl and 44 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 5:4. Both meta-phenylenediamine and para-phenylenediamine were used as amine monomers so as to achieve a mass ratio of 5:4. The weight average molecular weight was 450,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 20% and 2%, respectively, relative to the polymer solution.

This polymer solution was heated to 85 °C and spun as a spinning dope into a coagulation bath at 85 °C through a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.4 times in boiling water at 90 °C, then immersed in hot water at 90 °C for 40 seconds and washed.

Next, after being wound around a roller having a surface temperature of 170 °C and subjected to a dry heat treatment, the yarn was drawn 4.0 times on a hot plate having a surface temperature of 315 °C to obtain a wholly aromatic polyamide fiber. The obtained fiber had a weight average molecular weight of 450,000, a Fineness of 1.54 dtex, a breaking strength of 11.1 cN/dtex, a knot strength of 4.9 cN/dtex (45%), an elongation at break of 24%, a melting point of 313 °C, and a dry heat dimensional change rate at 250 °C of 0.30%.

### [Example 6]

A copolymerized aramid polymer powder containing 50 mol% of monomer units of meta-phenylenediamine and isophthaloyl and 50 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 1:1. Both meta-phenylenediamine and para-phenylenediamine were used as amine monomers so as to achieve a mass ratio of 1:1. The weight average molecular weight was 640,000. The polymer powder and calcium chloride were dissolved in N-methyl-2-pyrrolidone (NMP) to obtain a transparent polymer solution. At this time, the mass concentrations of the copolymerized aramid polymer and calcium chloride were adjusted to 16% and 3%, respectively, relative to the polymer solution.

This polymer solution was heated to 85 °C and spun as a spinning dope into a coagulation bath at 85 °C through a spinneret having 100 circular discharge holes with a hole diameter of 0.1 mm. The composition of this coagulation bath was 44 mass% of calcium chloride, 3 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.5 times in boiling water at 90 °C, then immersed in hot water at 90 °C for 40 seconds and washed.

Next, after being wound around a roller having a surface temperature of 170 °C and subjected to a dry heat treatment, the yarn was drawn 3.5 times on a hot plate having a surface temperature of 330 °C to obtain a wholly aromatic polyamide fiber. The obtained fiber had a weight average molecular weight of 640,000, a Fineness of 1.8 dtex, a breaking strength of 11.8 cN/dtex, a knot strength of 5.6 cN/dtex (48%), an elongation at break of 22%, a melting point of 301 °C, and a dry heat dimensional change rate at 250 °C of 0.70%.

### [Comparative Example 5]

The physical properties of a wholly aromatic copolyamide fiber ("Technora^{™}" manufactured by Teijin Limited) containing 100 mol% of monomer units of para-phenylenediamine and terephthaloyl based on the total thereof were measured, and the Fineness was 1.67 dtex, the breaking strength was 26.96 cN/dtex, the knot strength was 4.6 cN/dtex (16.9%), the elongation at break was 6.1%, the melting point was 500 °C or higher, and the dry heat dimensional change rate at 280 °C was 0.30%.

### [Comparative Example 6]

A copolymerized aramid polymer powder containing 33 mol% of monomer units of meta-phenylenediamine and isophthaloyl and 67 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 1:2. Both meta-phenylenediamine and para-phenylenediamine were used as amine monomers so as to achieve a mass ratio of 1:2. The polymer could not be spun because it did not exhibit good solubility in solvents such as NMP.

### [Comparative Example 7]

A polymer solution of a wholly aromatic polyamide fiber ("Twaron^{™}" manufactured by Teijin Limited) containing 100 mol% of monomer units of para-phenylenediamine and terephthaloyl based on the total thereof and a polymer solution of a wholly aromatic polyamide fiber ("Teijinconex^{™}" manufactured by Teijin Limited) containing 100 mol% of monomer units of meta-phenylenediamine and isophthaloyl based on the total thereof were mixed at a 5:95 mass ratio. This polymer solution was spun under the conditions of Example 4 to obtain a wholly aromatic polyamide fiber. The physical properties of the obtained fiber were measured, and the Fineness was 1.8 dtex, the breaking strength was 22.4 cN/dtex, the knot strength was 3.7 cN/dtex (16.5%), the elongation at break was 4.6%, the melting point could not be measured (400 °C or higher), and the dry heat dimensional change rate at 250 °C was 0%.

The physical properties of the fibers obtained in Examples 4 to 6 and Comparative Examples 5 to 7 are shown in Table 3.

**[Table 3]**

| | Ex 4 | Ex 5 | Ex 6 | Comp Ex 5 | Comp Ex 6 | Comp Ex 7 |
|---|---|---|---|---|---|---|
| Ratio of monomer units of meta-phenylenediamine and/or isophthaloyl (mol%) | 67 | 56 | 50 | 0 | 33 | - |
| Fiber breaking strength (cN/dtex) | 10.4 | 11.1 | 11.8 | 27.0 | Could not be spun | 22.4 |
| Fiber knot strength (cN/dtex) | 4.4 (42.3%) | 4.9 (45%) | 5.6 (48%) | 4.6 (16.9%) | - | 3.7 (16.5%) |
| Fiber elongation at break (%) | 23 | 24 | 22 | 6.1 | Could not be spun | 4.6 |
| Dimensional change rate at 250 °C (%) | 1.00 | 0.30 | 0.70 | 0.30 | Could not be spun | 0.00 |
| Fiber melting point (°C) | 307 | 313 | 301 | >500 | Could not be spun | >400 |

### [Example 7]

An amine monomer was dissolved in NMP, the solution was cooled to 0 °C, and an acid chloride monomer was added thereto while stirring with a mechanical stirrer. At this time, the solution was adjusted so that the meta-phenylenediamine units was 29 mol% of the total, the monomer units of para-phenylenediamine and terephthaloyl were 71 mol %, and the mass concentration of the polymer after polymerization was 10.7% relative to the total solution. Further, terephthaloyl chloride was used as the acid chloride monomer, and both meta-phenylenediamine and para-phenylenediamine were used as the amine monomers so as to achieve a mass ratio of 4:3. After confirming that the increase in viscosity and solution temperature due to the progression of polymerization had stopped, a polymer solution containing a copolymerized aramid polymer was prepared by adding an equivalent amount of calcium hydroxide to the above acid chloride monomer and stirring until it became transparent. The weight average molecular weight was 690,000.

This polymer solution was heated to 85 °C and spun as a spinning dope into a coagulation bath at 85 °C through a spinneret having 100 circular discharge holes with a hole diameter of 0.1 mm. The composition of this coagulation bath was 43 mass% of calcium chloride, 10 mass% of NMP, and the remaining 47 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.0 times in boiling water at 90 °C, then immersed in hot water at 90 °C for 40 seconds and washed.

Next, after being wound around a roller having a surface temperature of 170 °C and subjected to a dry heat treatment, the yarn was drawn 2.2 times on a hot plate having a surface temperature of 335 °C to obtain a wholly aromatic polyamide fiber. The obtained fiber had a Fineness of 1.3 dtex, a breaking strength of 10.5 cN/dtex, an elongation at break of 15.0%, and a dry heat dimensional change rate at 300 °C of 2.0%.

### [Example 8]

A polymer solution containing a copolymerized aramid polymer containing 33 mol% of meta-phenylenediamine units and 67 mol% of monomer units of para-phenylenediamine and terephthaloyl based on the total thereof was synthesized by solution polymerization in accordance with Example 7. At this time, terephthaloyl chloride was used as the acid chloride monomer. Both meta-phenylenediamine and para-phenylenediamine were used as amine monomers so as to achieve a mass ratio of 2:1. The weight average molecular weight was 620,000. This polymer solution was heated to 85 °C and spun as a spinning dope into a coagulation bath at 85 °C through a spinneret having 100 circular discharge holes with a hole diameter of 0.1 mm. The composition of this coagulation bath was 45 mass% of calcium chloride, 12 mass% of NMP, and the remaining 43 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.0 times in boiling water at 90 °C, then immersed in hot water at 90 °C for 40 seconds and washed.

Next, after being wound around a roller having a surface temperature of 170 °C and subjected to a dry heat treatment, the yarn was drawn 2.0 times on a hot plate having a surface temperature of 325 °C to obtain a wholly aromatic polyamide fiber. The obtained fiber had a Fineness of 1.5 dtex, a breaking strength of 10.6 cN/dtex, an elongation at break of 13.0%, and a dry heat dimensional change rate at 300 °C of 2.1%.

### [Example 9]

A polymer solution containing a copolymerized aramid polymer containing 25 mol% of meta-phenylenediamine units and 75 mol% of monomer units of para-phenylenediamine and terephthaloyl based on the total thereof was synthesized by solution polymerization in accordance with Example 7. At this time, terephthaloyl chloride was used as the acid chloride monomer. Both meta-phenylenediamine and para-phenylenediamine were used as amine monomers so as to achieve a mass ratio of 1:1. The weight average molecular weight was 580,000. This polymer solution was heated to 85 °C and spun into a coagulation bath at 85 °C through a spinneret having 100 circular discharge holes with a hole diameter of 0.1 mm. The composition of this coagulation bath was 40 mass% of calcium chloride, 10 mass% of NMP, and the remaining 50 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.3 times in boiling water at 90 °C, then immersed in hot water at 90 °C for 40 seconds and washed.

Next, after being wound around a roller having a surface temperature of 170 °C and subjected to a dry heat treatment, the yarn was drawn 1.5 times on a hot plate having a surface temperature of 325 °C to obtain a wholly aromatic polyamide fiber. The obtained fiber had a Fineness of 1.5 dtex, a breaking strength of 12.0 cN/dtex, an elongation at break of 13.0%, and a dry heat dimensional change rate at 300 °C of 1.9%.

### [Comparative Example 8]

A polymer solution containing a copolymerized aramid polymer containing 66 mol% of meta-phenylenediamine units and 34 mol% of monomer units of para-phenylenediamine and terephthaloyl based on the total thereof was synthesized by solution polymerization in accordance with Example 7. At this time, isophthaloyl chloride and terephthaloyl chloride was used as acid chloride monomers so as to achieve a mass ratio of 1:2. Meta-phenylenediamine was used as the amine monomer. The weight average molecular weight was 580,000. This polymer solution was heated to 85 °C and spun as a spinning dope into a coagulation bath at 85 °C through a spinneret having 100 circular discharge holes with a hole diameter of 0.1 mm. The composition of this coagulation bath was 40 mass% of calcium chloride, 10 mass% of NMP, and the remaining 50 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.3 times in boiling water at 90 °C, then immersed in hot water at 90 °C for 40 seconds and washed.

Next, after being wound around a roller having a surface temperature of 170 °C and subjected to a dry heat treatment, the yarn was drawn 2.0 times on a hot plate having a surface temperature of 325 °C to obtain a wholly aromatic polyamide fiber. The obtained fiber had a Fineness of 2.0 dtex, a breaking strength of 6.3 cN/dtex, an elongation at break of 12.0%, and a dry heat dimensional change rate at 300 °C of 15%.

### [Comparative Example 9]

A polymer solution containing a copolymerized aramid polymer containing 9 mol% of meta-phenylenediamine units and 91 mol% of monomer units of para-phenylenediamine and terephthaloyl based on the total thereof was synthesized by solution polymerization in accordance with Example 7. At this time, terephthaloyl chloride was used as the acid chloride monomer. Both meta-phenylenediamine and para-phenylenediamine were used as amine monomers so as to achieve a mass ratio of 6:14. As the polymerization progressed, the solubility of the polymer decreased, and the polymer did not exhibit solubility in solvents such as NMP, so it could not be spun.

### [Comparative Example 10]

The physical properties of a wholly aromatic polyamide fiber ("Teijinconex^{™}" manufactured by Teijin Limited) containing 100 mol% of monomer units of meta-phenylenediamine and isophthaloyl based on the total thereof were measured, and the Fineness was 2.2 dtex, the breaking strength was 4.8 cN/dtex, the elongation at break was 39.0%, and the dry heat dimensional change rate at 300 °C was 5.0%.

### [Comparative Example 11]

The physical properties of a wholly aromatic polyamide fiber ("Twaron^{™}" manufactured by Teijin Limited) containing 100 mol% monomer units of para-phenylenediamine and terephthaloyl were measured, and the Fineness was 2.0 dtex, the breaking strength was 22 cN/dtex, the elongation at break was 2.5%, and the dry heat dimensional change rate at 300 °C was 0%. Since this fiber had an elongation at break of less than 5.0%, it is insufficient for exhibiting high toughness.

The physical properties of the fibers obtained in Examples 7 to 9 and Comparative Examples 8 to 11 are shown in Table 4.

**[Table 4]**

| | Ex 7 | Ex 8 | Ex 9 | Comp Ex 8 | Comp Ex 9 | Comp Ex 10 | Comp Ex 11 |
|---|---|---|---|---|---|---|---|
| Ratio of monomer units of meta-phenylenediamine and/or isophthaloyl (mol%) | 29 | 33 | 25 | 66 | 9 | 100 | 0 |
| Fiber breaking strength (cN/dtex) | 10.5 | 10.6 | 12.0 | 6.3 | Could not be spun | 4.8 | 22.0 |
| Fiber elongation at break (%) | 15.0 | 13.0 | 13.0 | 12.0 | Could not be spun | 39.0 | 2.5 |
| Dimensional change rate at 250 °C (%) | 2.0 | 2.1 | 1.9 | 15.0 | Could not be spun | 5.0 | 0.0 |

### [Example 10]

A copolymerized aramid polymer powder containing 67 mol% of monomer units of meta-phenylenediamine and isophthaloyl and 33 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 2:1. Both meta-phenylenediamine and para-phenylenediamine were used as amine monomers so as to achieve a mass ratio of 2:1. The weight average molecular weight was 660,000. The polymer powder and electrically conductive carbon black particles (surface specific resistance of 10⁴ Ω) were dissolved and dispersed in N-methyl-2-pyrrolidone (NMP) to obtain a polymer solution. At this time, the mass concentration of the copolymerized aramid polymer was adjusted to 16% relative to the polymer solution, and the mass concentration of the electrically conductive carbon black was adjusted to 30 mass% relative to the aramid polymer.

This polymer solution was heated to 85 °C and spun as a spinning dope by discharging it into a coagulation bath at 85 °C from a spinneret having 100 circular discharge holes with a hole diameter of 0.1 mm. The composition of this coagulation bath was 43 mass% of calcium chloride, 4 mass% of NMP, and the remaining 53 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 1.4 times in boiling water at 90 °C, then immersed in hot water at 90 °C for 40 seconds and washed.

Next, after being wound around a roller having a surface temperature of 170 °C and subjected to a dry heat treatment, the yarn was drawn 5.7 times on a hot plate having a surface temperature of 325 °C to obtain a wholly aromatic polyamide fiber. The obtained fiber had a Fineness of 2.0 dtex, a breaking strength of 4.9 cN/dtex, an elongation at break of 14%, a melting point of 301 °C, and an electrical resistivity of 61.1 Ωcm.

### [Example 11]

A copolymerized aramid polymer powder containing 60 mol% of monomer units of meta-phenylenediamine and isophthaloyl and 40 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 3:2. Both meta-phenylenediamine and para-phenylenediamine were used as amine monomers so as to achieve a mass ratio of 3:2. The weight average molecular weight was 650,000. The polymer powder and electrically conductive carbon black particles (surface specific resistance of 10⁴ Ω) were dissolved and dispersed in N-methyl-2-pyrrolidone (NMP) to obtain a polymer solution. At this time, the mass concentration of the copolymerized aramid polymer was adjusted to 18% relative to the polymer solution, and the mass concentration of the electrically conductive carbon black was adjusted to 25% relative to the aramid polymer.

This polymer solution was heated to 85 °C and spun as a spinning dope by discharging it into a coagulation bath at 88 °C from a spinneret having 100 circular discharge holes with a hole diameter of 0.1 mm. The composition of this coagulation bath was 44 mass% of calcium chloride, 2 mass% of NMP, and the remaining 54 mass% of water, and after passing through an immersion length (effective coagulation bath length) of 100 cm at a yarn speed of 5.0 m/min, the yarn was pulled out into the air.

The coagulated yarn was washed with water in first and second water washing baths, and the total immersion time at this time was 200 seconds. The first and second water washing bath temperatures for water used were 20 °C and 30 °C, respectively. The washed yarn was drawn 2.5 times in boiling water at 90 °C, then immersed in hot water at 90 °C for 40 seconds and washed. Next, after being wound around a roller having a surface temperature of 170 °C and subjected to a dry heat treatment, the yarn was drawn 4 times on a hot plate having a surface temperature of 330 °C to obtain a wholly aromatic polyamide fiber. The obtained fiber had a Fineness of 1.7 dtex, a breaking strength of 5.2 cN/dtex, an elongation at break of 16%, a melting point of 306 °C, and an electrical resistivity of 171 Ωcm.

### [Comparative Example 12]

A copolymerized aramid polymer powder containing 75 mol% of monomer units of meta-phenylenediamine and isophthaloyl and 25 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 3:1. Both meta-phenylenediamine and para-phenylenediamine were used as amine monomers so as to achieve a mass ratio of 3:1. The weight average molecular weight was 700,000. The polymer powder and electrically conductive carbon black particles (surface specific resistance of 10⁴ Ω) were dissolved and dispersed in N-methyl-2-pyrrolidone (NMP) to obtain a polymer solution. At this time, the mass concentration of the copolymerized aramid polymer was adjusted to 18% relative to the polymer solution, and the mass concentration of the electrically conductive carbon black was adjusted to 25% relative to the aramid polymer.

This polymer solution was spun under the conditions as Example 10 to obtain a wholly aromatic polyamide fiber. At this time, the boiling water draw ratio was limited to 3.0 times, and the drawing ratio of the hot plate was limited to 1.3 times, and at higher ratios, fiber breakage occurred. The obtained fiber had a Fineness of 1.9 dtex, a breaking strength of 4.9 cN/dtex, an elongation at break of 17%, and a melting point of 340 °C. Since the total draw ratio was not sufficiently obtained as described above, the electrical resistivity exhibited a high value of 7.98 × 10⁶ Ωcm.

### [Comparative Example 13]

A copolymerized aramid polymer powder containing 33 mol% of monomer units of meta-phenylenediamine and isophthaloyl and 64 mol% of monomer units of para-phenylenediamine and terephthaloyl based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 1:2. Both meta-phenylenediamine and para-phenylenediamine were used as amine monomers so as to achieve a mass ratio of 1:2. The polymer could not be spun because it did not exhibit good solubility in solvents such as NMP.

### [Comparative Example 14]

A copolymerized aramid polymer powder containing 67 mol% of monomer units of meta-phenylenediamine and isophthaloyl and 33 mol% of monomer units of para-phenylenediamine and terephthaloyl based on the total thereof was synthesized. At this time, both isophthaloyl chloride and terephthaloyl chloride were used as acid chloride monomers so as to achieve a mass ratio of 2:1. Both meta-phenylenediamine and para-phenylenediamine were used as amine monomers so as to achieve a mass ratio of 2:1. The weight average molecular weight was 590,000. The polymer powder and electrically conductive carbon black particles (surface specific resistance of 10⁴ Ω) were dissolved and dispersed in N-methyl-2-pyrrolidone (NMP) to obtain a polymer solution. At this time, the mass concentration of the copolymerized aramid polymer was adjusted to 21% relative to the polymer solution, and the mass concentration of the electrically conductive carbon black was adjusted to 5% relative to the aramid polymer.

This polymer solution was spun under the conditions of Example 10 to obtain a wholly aromatic polyamide fiber. At this time, the boiling water draw ratio was 2.5 times, and the hot plate draw ratio was 3.2 times. The obtained fiber had a Fineness of 1.7 dtex, a breaking strength of 6.4 cN/dtex, an elongation at break of 21%, a melting point of 304 °C, and an electrical resistivity of 2.69 × 10⁶ Ωcm.

### [Comparative Example 15]

A copolymerized aramid polymer powder containing 67 mol% of monomer units of meta-phenylenediamine and isophthaloyl and 33 mol% of monomer units of para-phenylenediamine and terephthaloyl based on the total thereof was synthesized. At this time, both isophthaloyl chloride and terephthaloyl chloride were used as acid chloride monomers so as to achieve a mass ratio of 2:1. Both meta-phenylenediamine and para-phenylenediamine were used as amine monomers so as to achieve a mass ratio of 2:1. The weight average molecular weight was 660,000. The polymer powder and electrically conductive carbon black particles (surface specific resistance of 10⁴ Ω) were dissolved and dispersed in N-methyl-2-pyrrolidone (NMP) to obtain a polymer solution. At this time, the mass concentration of the copolymerized aramid polymer was adjusted to 16% relative to the polymer solution, and the mass concentration of the electrically conductive carbon black was adjusted to 45% relative to the aramid polymer.

This polymer solution was spun under the conditions of Example 10 to obtain a wholly aromatic polyamide fiber. At this time, the boiling water draw ratio was limited to 1.1 times, and the hot plate draw ratio was limited to 2.5 times, and at higher ratios, fiber breakage occurred. The obtained fiber had a Fineness of 7.0 dtex, a breaking strength of 1.9 cN/dtex, an elongation at break of 13%, a melting point of 313 °C, and an electrical resistivity of 8.5 Qcm.

The physical properties of the fibers obtained in Examples 10 and 11 and Comparative Examples 12 to 15 are shown in Table 5.

**[Table 5]**

| | Ex 10 | Ex 11 | Comp Ex 12 | Comp Ex 13 | Comp Ex 14 | Comp Ex 15 |
|---|---|---|---|---|---|---|
| Ratio of monomer units of meta-phenylenediamine and/or isophthaloyl (mol%) | 67 | 60 | 75 | 33 | 67 | 67 |
| Ratio of electrically conductive particles in fiber (mass%) | 30 | 25 | 25 | - | 5 | 45 |
| Fiber breaking strength (cN/dtex) | 4.9 | 5.2 | 49. | Could not be spun | 6.4 | 1.9 |
| Fiber elongation at break (%) | 14 | 16 | 17 | Could not be spun | 21 | 13 |
| Electrical resistivity (Ωcm) | 61.1 | 171 | 7.98×10⁶ | Could not be spun | 2.69×10⁶ | 8.50 |
| Fiber melting point (°C) | 301 | 306 | 340 | Could not be spun | 304 | 313 |

### [Example 12]

A copolymerized aramid polymer powder containing 56 mol% of meta-phenylene isophthalamide units and 44 mol% of para-phenylene terephthalamide units based on the total thereof was synthesized by interfacial polymerization in accordance with Japanese Examined Patent Publication (Kokoku) No. 47-10863. At this time, both isophthaloyl chloride and terephthaloyl chloride were used as acid chloride monomers so as to achieve a mass ratio of 5:4. Both meta-phenylenediamine and para-phenylenediamine were used as amine monomers so as to achieve a mass ratio of 5:4. The weight average molecular weight was 470,000. The polymer powder was dissolved in 99.8% sulfuric acid to obtain a transparent polymer solution. At this time, the mass concentration of the copolymerized aramid polymer was adjusted to 18% relative to the polymer solution.

This polymer solution was heated to 60 °C and spun as a spinning dope by discharging it into water at 5 °C through an air gap length of 8 mm from a spinneret heated to 70 °C and having 100 circular discharge holes with a hole diameter of 0.08 mm. In a primary coagulation step, the yarn was passed through an immersion length (effective coagulation bath length) of 5 cm at a yarn speed of 30 m/min, and the yarn then pulled out into the air.

The coagulated yarn was washed with water in first through third water washing baths, and the total immersion time at this time was 30 seconds. The first through third water washing bath temperatures for water used were 20 °C, 30 °C, and 60 °C, respectively. The washed yarn was drawn 1.2 times in boiling water at 90 °C.

Next, after being wound around a roller having a surface temperature of 180 °C and subjected to a dry heat treatment, the yarn was drawn 6.5 times on a hot plate having a surface temperature of 315 °C to obtain a wholly aromatic polyamide fiber. The obtained fiber had a Fineness of 1.2 dtex, a breaking strength of 10.1 cN/dtex, an elongation at break of 19%, a melting point of 310 °C, and a dry heat dimensional change rate at 250 °C of 0.5%.

### [Example 13]

A polymer solution containing a copolymerized aramid polymer containing 50 mol% of meta-phenylenediamine units and 50 mol% of terephthaloyl monomer units based on the total thereof was synthesized by solution polymerization in accordance with Example 7. At this time, terephthaloyl chloride was used as the acid chloride monomer. Furthermore, meta-phenylenediamine was used as the amine monomer. The weight average molecular weight was 560,000. This polymer solution was placed on a glass plate and thinned by the doctor blade method. It was then dried at 100 °C for 5 minutes and introduced into a water bath to remove the solvent. It was dried at 100 °C for 30 minutes to obtain a wholly aromatic polyamide film. The obtained film had a thickness of 15 µm, a breaking strength of 130 MPa, an elongation at break of 17.0%, a glass transition temperature of 320 °C, and a dry heat dimensional change rate at 300 °C of 0.5%.

### [Example 14]

A polymer solution containing a copolymerized aramid polymer containing 25 mol% of meta-phenylenediamine units and 75 mol% of monomer units of para-phenylenediamine and terephthaloyl based on the total thereof was synthesized by solution polymerization in accordance with Example 7. At this time, terephthaloyl chloride was used as the acid chloride monomer. Furthermore, meta-phenylenediamine and para-phenylenediamine were used as amine monomers so as to achieve a mass ratio of 1:1. The weight average molecular weight was 580,000. This polymer solution was formed into a film by the same method as in Example 13 to obtain a copolymer aramid film. The obtained film had a thickness of 15 µm, a breaking strength of 120 MPa, an elongation at break of 6.0%, a glass transition temperature of 280 °C, and a dry heat dimensional change rate at 300 °C of 3.0%.

### [Comparative Example 16]

The polymer solution synthesized in Comparative Example 8 was formed into a film in the same manner as in Example 13 to obtain a copolymer aramid film. The obtained film had a thickness of 15 µm, a breaking strength of 50 MPa, an elongation at break of 13%, a glass transition temperature of 260 °C, and a dry heat dimensional change rate at 300 °C of 5.8%.

### Industrial Applicability

Since the heat-resistant high-toughness fiber according to the present invention has an excellent balance of strength, elongation, and heat resistance properties, it can suitably be used in applications where general-purpose fibers have been used at the expense of heat resistance, and applications where mechanical properties have been compensated for by combining a plurality of fibers. Furthermore, it can be applied to new heat-resistant and high-toughness materials which has suitable strength and flexibility in reinforcing material applications, such as materials in the field of rubber reinforcement, which requires significant deformation and strength. It can be applied to new heat-resistant and high-toughness materials which have suitable strength and flexibility for use as fall prevention materials, such as materials for safety ropes, which are frequently deformed and require strength. By imparting electrical conductivity by means of the present invention, the fiber of the present invention can maintain high electrical conductivity and static electricity properties even in high temperature environments, whereby it is useful not only for protective clothing, but also as a reinforcing fiber for resin structural materials, which require electrostatic properties and which are exposed to high temperature environments. Since the heat-resistant high-toughness film according to the present invention has an excellent balance of physical properties such as strength, elongation, glass transition temperature, and heat shrinkage, it is particularly useful in applications where strength and elongation are required at high temperatures.

## Claims

1. A heat-resistant high-toughness fiber, having a breaking strength of 3.5 to 15 cN/dtex, an elongation at break of 5 to 30%, and a melting point of 290 °C or higher.

2. The heat-resistant high-toughness fiber according to claim 1, wherein the heat-resistant high-toughness fiber comprises a copolymerized aramid polymer containing at least three monomer units selected from the group consisting of meta-phenylenediamine, para-phenylenediamine, isophthaloyl, and terephthaloyl.

3. The heat-resistant high-toughness fiber according to claim 2, wherein a molar ratio of monomer units of the meta-phenylenediamine and/or the isophthaloyl to monomer units of the para-phenylenediamine and/or the terephthaloyl is in the range of 10 or more and less than 70:90 or less and greater than 30.

4. The heat-resistant high-toughness fiber according to any one of claims 1 to 3, wherein the breaking strength is 7 to 15 cN/dtex, the elongation at break is 10 to 30%, and a dry heat dimensional change rate at 250 °C is less than 2%.

5. The heat-resistant high-toughness fiber according to claim 4, further having a knot strength of 4.4 to 5.6 cN/dtex.

6. The heat-resistant high-toughness fiber according to claim 4 or 5, wherein the molar ratio of monomer units of the meta-phenylenediamine and/or the isophthaloyl to monomer units of the para-phenylenediamine and/or the terephthaloyl is in the range of 40 or more and less than 70:60 or less and greater than 30.

7. The heat-resistant high-toughness fiber according to any one of claims 1 to 3, wherein the breaking strength is 8.0 cN/dtex or more and less than 15.0 cN/dtex, the elongation at break is greater than 5.0% and 20.0% or less, and a dry heat dimensional change rate at 300 °C is less than 5%.

8. The heat-resistant high-toughness fiber according to claim 7, wherein the molar ratio of monomer units of the meta-phenylenediamine and/or the isophthaloyl to monomer units of the para-phenylenediamine and/or the terephthaloyl is in the range of 10 or more and less than 40:90 or less and greater than 60.

9. The heat-resistant high-toughness fiber according to any one of claims 1 to 3, comprising electrically conductive fine particles in the fiber and having an electrical resistivity of 10³ Ωcm or less, wherein the breaking strength is 3.5 to 10 cN/dtex.

10. The heat-resistant high-toughness fiber according to claim 9, comprising 6 to 40 mass% of the electrically conductive fine particles.

11. The heat-resistant high-toughness fiber according to claim 9 or 10, wherein the electrically conductive fine particles are electrically conductive carbon black.

12. The heat-resistant high-toughness fiber according to any one of claims 9 to 11, wherein the molar ratio of monomer units of the meta-phenylenediamine and/or the isophthaloyl to monomer units of the para-phenylenediamine and/or the terephthaloyl is in the range of 50 or more and less than 70:50 or less and greater than 30.

13. A production method of heat-resistant high-toughness fiber, comprising the following steps (1) to (6):
(1) providing a copolymerized aramid polymer containing at least three monomer units selected from the group consisting of meta-phenylenediamine, para-phenylenediamine, isophthaloyl, and terephthaloyl, a molar ratio of monomer units of the meta-phenylenediamine and/or the isophthaloyl to monomer units of the para-phenylenediamine and/or the terephthaloyl being in the range of 10 or more and less than 70: 90 or less and greater than 30, and having a weight average molecular weight of 400,000 to 1,000,000,
(2) dissolving the copolymerized aramid polymer in a solvent to prepare a spinning dope,
(3) spinning the spinning dope through a spinneret into a coagulation bath to obtain a coagulated yarn;
(4) washing the coagulated yarn in an aqueous washing bath and drawing it at a draw ratio in the range of 1.1 to 5.0 times in a boiling water bath to obtain a fiber;
(5) subjecting the fiber to dry heat treatment in the range of 100 to 250 °C, and
(6) after the dry heat treatment, heat-drawing the fiber at a draw ratio in the range of 2.0 to 10.0 times while heat-treating at 290 to 380 °C.

14. The production method according to claim 13, wherein the spinning dope comprises the copolymerized aramid polymer dissolved in the range of 5 to 30 mass% in an amide solvent and the coagulation bath contains the amide solvent in an amount of 1 to 20 mass%.

15. The production method according to claim 13, wherein the spinning dope comprises the copolymerized aramid polymer dissolved in the range of 5 to 30 mass% in concentrated sulfuric acid having a concentration of 95% or more and the coagulation bath contains water.

16. A heat-resistant high-toughness film, having a breaking strength of 80 to 150 MPa, an elongation at break of 5 to 30%, a glass transition temperature of 250 °C or higher, and a heat shrinkage at 300 °C of 5% or less, and comprising:
a copolymerized aramid polymer containing three monomer units selected from the group consisting of meta-phenylenediamine, para-phenylenediamine, isophthaloyl, and terephthaloyl, or two monomer units of meta-phenylenediamine and terephthaloyl, or two monomer units of para-phenylenediamine and isophthaloyl.
